# EUROPEAN PATENT APPLICATION

(11) **EP 3 048 294 A1**
(43) Date of publication of application: **27.07.2016**
(21) Application number: 16151739.6
(22) Date of filing: 18.01.2016
(51) Int. Cl.: F02P 5/152, F02D 35/02, F02D 41/00

(54) **SYSTEMS AND METHODS FOR ESTIMATING FUEL QUALITY IN AN ENGINE**

(30) Priority: 20.01.2015 US 201514600674
(71) Applicant: General Electric Company, Schenectady, NY 12345 (US)
(72) Inventor: MANN, Scott K., Waukesha, WI Wisconsin 53188 (US); BIZUB, Jeffrey Jacob, Waukesha, WI Wisconsin 53188 (US); SPAULDING, Dennis John, Waukesha, WI Wisconsin 53188 (US)
(74) Representative: Williams, Andrew Richard

(57) **Abstract**

The subject matter disclosed herein relates to a system (8) and method for monitoring and controlling a combustion engine (10). In one embodiment, a system includes a controller (25) configured to control operations of a combustion engine, to receive a signal from at least one knock sensor (23) coupled to the combustion engine, to determine a knock margin value from the signal, and to estimate a fuel quality value of a fuel injected into the combustion engine based at least on a comparison between the knock margin value and a laboratory performance data set.

## Description

### BACKGROUND

The subject matter disclosed herein relates to a system and method for monitoring and controlling a combustion engine.

Combustion engines typically combust a carbonaceous fuel, such as natural gas, gasoline, diesel, and the like, and use the corresponding expansion of high temperature and pressure gases to apply a force to certain components of the engine (e.g., piston disposed in a cylinder) to move the components over a distance. Each cylinder may include one or more valves that open and close correlative with combustion of the carbonaceous fuel. For example, an intake valve may direct an oxidant such as air into the cylinder. A fuel mixes with the oxidant and combusts (e.g., ignition via a spark) to generate combustion fluids (e.g., hot gases), which then exit the cylinder via an exhaust valve. Engine timing (e.g., ignition timing) may affect fuel economy, power, and other operational parameters. Unfortunately, suitable ignition timing may vary depending on a fuel quality, which may be unknown and/or variable over time.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In a first embodiment, a system includes a controller configured to control operations of a combustion engine, to receive a signal from at least one knock sensor coupled to the combustion engine, to determine a knock margin value from the signal, and to estimate a fuel quality value of a fuel injected into the combustion engine based at least on a comparison between the knock margin value and a laboratory performance data set.

In a second embodiment, a system includes a combustion engine controller. The combustion engine controller is configured to receive a signal from at least one knock sensor coupled to a combustion engine, determine a knock margin value from the signal, estimate a fuel quality value of a fuel injected into the combustion engine based at least on a comparison between the knock margin value and a laboratory performance data set, and output a control action for at least the combustion engine based on the estimated fuel quality value.

In a third embodiment, a method includes receiving, via a controller, a signal from at least one knock sensor coupled to a combustion engine; determining, via the controller, a knock margin value from the signal; estimating, via the controller, a fuel quality value of a fuel injected into the combustion engine based at least on a comparison between the knock margin value and a laboratory performance data set; and outputting, via the controller, a control action for at least the combustion engine based on the estimated fuel quality value.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 illustrates a block diagram of an embodiment of a portion of an engine driven power generation system having a reciprocating internal combustion engine;
FIG. 2 illustrates a cross-sectional side view of an embodiment of a piston-cylinder assembly having a piston disposed within a cylinder of the reciprocating engine of FIG. 1;
FIG. 3 illustrates a block diagram of an embodiment of a portion of the engine driven power generation system of FIG. 1 having a controller coupled to a fuel injection system;
FIG. 4 illustrates a block diagram of an embodiment of the controller of FIG. 3;
FIG. 5 illustrates a flow chart of an embodiment of a method for determining a fuel quality of the engine, such as the engine from FIG. 1;
FIG. 6 is a graphical representation of an embodiment of a laboratory performance data set for determining a fuel quality of the engine, such as the engine from FIG. 1.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

The presently disclosed systems and methods relate to accurately estimating fuel quality in an internal combustion engine using one or more sensors, such as a knock sensor. Engine knock refers to, or may include, combustion of an oxidant/fuel mixture (e.g., air/fuel mixture) at an unexpected time during the engine cycle, e.g., outside a normal window of time for combustion. A knock sensor may include an acoustic or sound sensor, a vibration sensor, or any combination thereof. For example, the knock sensor may be a piezoelectric accelerometer, a microelectromechanical system (MEMS) sensor, a Hall effect sensor, a magnetostrictive sensor, and/or any other sensor designed to sense vibration, acceleration, acoustics, sound, and/or movement. The knock sensor may monitor acoustics and/or vibrations associated with combustion in the engine to detect a knock condition, e.g., combustion at an unexpected time not during a normal window of time for combustion. In other embodiments, the sensor may not be a knock sensor, but any sensor that may sense vibration, pressure, acceleration, deflection, or movement.

In certain instances, it may be desirable to purposefully adjust engine timing (e.g., ignition timing) during normal engine operation to cause engine knock so that a knock margin can be measured. Knock margin refers to a difference between a base engine timing and a timing at which engine knock occurs. In certain embodiments, a knock sensor and an engine controller may be used to measure knock margin. For example, the engine controller may adjust engine timing (e.g., ignition timing) from the base timing value until the knock sensor measures an engine knocking event. Measuring knock margin during normal engine operation may be beneficial because the measured knock margin value may be compared to laboratory performance data to estimate various operating conditions of the engine that may relate to engine performance. For example, the knock margin value may be compared to laboratory performance data to estimate a quality of the fuel in the internal combustion engine.

Engine timing (e.g., ignition timing) may refer to a point in the engine cycle when a spark occurs in a combustion chamber of the engine. The spark may be created by a spark plug or any other device configured to generate a spark. In other embodiments, engine timing may correspond to when a fuel is introduced into a combustion chamber of the engine, or when a valve controlling fuel and/or oxidant into the engine is adjusted. Engine timing may influence engine performance, and therefore it is desirable to adjust engine timing to an optimal level based on measured operating conditions of the engine. Several factors, or operating conditions of the engine, may affect engine timing. For example, such factors may include fuel quality, fuel temperature, fuel pressure, engine speed, load, air temperature, engine temperature, and intake air pressure, among others.

During normal engine operation, engine timing may be adjusted using a controller, which may use an engine timing map in order to determine the appropriate engine timing value. An engine timing map may include a set of data that provides an engine timing value that corresponds to an engine speed and/or load, among other factors. The engine timing values in the engine timing map, however, depend on the engine operating conditions, such as fuel quality, fuel temperature, fuel pressure, air temperature, engine temperature, and intake air pressure. Therefore, the engine timing map may be adjusted by the controller based on measured operating parameters of the engine to determine optimal timing values, thereby enhancing engine performance. For example, the engine timing map may be adjusted based on a measured fuel quality value determined from a knock margin.

The quality of the fuel in an internal combustion engine may vary from day to day because fuel may be received from a variety of sources, and thus, the fuel characteristics may change between engine cycles. Without the disclosed embodiments, engine timing maps may not be adjusted in accordance with fuel quality variations because fuel quality is generally not continuously measured. Therefore, changes in fuel quality oftentimes go unnoticed and unaccounted for in engine control. In some instances, an operator of the engine may manually input a value (e.g., a Waukesha Knock Index ("WKI") value , an anti-knock index ("AKI") value, a research octane number ("RON"), a motor octane number ("MON"), an octane blending value, a cetane number, a methane number, a lower heating value ("LHV"), a higher heating value ("HHV"), a British thermal unit ("BTU") value, a laminar flame speed, and/or a hydrogen to carbon ratio) for the fuel quality into a user interface (e.g., an HMI panel) such that a controller can account for the fuel quality value. The operator may obtain such a value from the supplier of the fuel or from a measuring device, such as a calorimeter or gas chromatograph, and enter the fuel quality value at a set interval (e.g., once a day, once a week, once a month, etc.). However, it is not guaranteed that an operator will input such data accurately, and therefore, the engine timing map may not be adjusted to account for fuel quality variations, which may lead to poor engine performance.

It may be desirable to have a system that can continuously and accurately estimate a fuel quality value and send a signal relating to the fuel quality value to a controller, so that no user input is necessary. It may be desirable to use a sensor (e.g., a knock sensor), and more particularly to compare a knock margin measured from a knock sensor to laboratory performance data, to measure fuel quality, because knock sensors and engine controllers may be pre-installed in internal combustion engines. Further, separate devices for measuring fuel quality, such as calorimeters and gas chromatographs, may be expensive and may still call for engine operators to manually input fuel quality values into a user input.

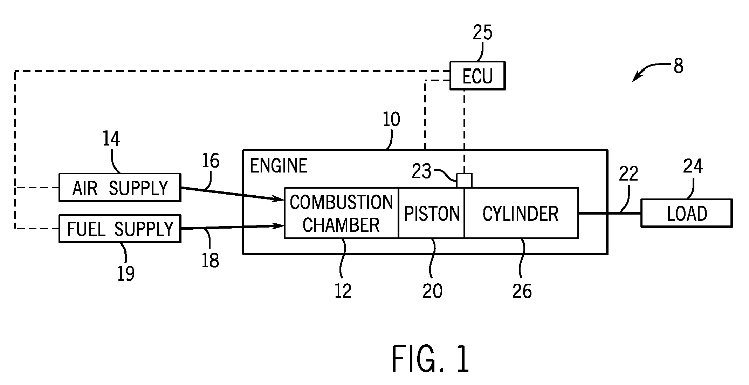

Turning to the drawings, FIG. 1 illustrates a block diagram of an embodiment of a portion of an engine driven power generation system having a reciprocating internal combustion engine. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). An oxidant supply 14 (e.g., an air supply) is configured to provide a pressurized oxidant 16, such as air, oxygen, oxygen-enriched air, oxygen-reduced air, or any combination thereof, to each combustion chamber 12. The combustion chamber 12 is also configured to receive a fuel 18 (e.g., a liquid and/or gaseous fuel) from a fuel supply 19, and a fuel-air mixture ignites and combusts within each combustion chamber 12. The hot pressurized combustion gases cause a piston 20 adjacent to each combustion chamber 12 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example. The fuel 18 may also include a variety of liquid fuels, such as gasoline or diesel fuel.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders 26 (e.g., 1-24). For example, in certain embodiments, the system 8 may include a large-scale industrial reciprocating engine having 4, 6, 8, 10, 16, 24 or more pistons 20 reciprocating in cylinders 26. In some such cases, the cylinders 26 and/or the pistons 20 may have a diameter of between approximately 13.5 - 34 centimeters (cm). In some embodiments, the cylinders 26 and/or the pistons 20 may have a diameter of between approximately 10-40 cm, 15-25 cm, or about 15 cm. The system 10 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The driven power generation system 8 may include one or more knock sensors 23 suitable for detecting engine "knock." The knock sensor 23 may sense vibrations, acoustics, or sound caused by combustion in the engine 10, such as vibrations, acoustics, or sound due to detonation, pre-ignition, and/or pinging. Therefore, the knock sensor 23 may include an acoustic or sound sensor, a vibration sensor, or a combination thereof. For example, the knock sensor 23 may include a piezoelectric vibration sensor. The knock sensor 23 may monitor acoustics and/or vibration associated with combustion in the engine 10 to detect a knock condition, e.g., combustion at an unexpected time not during a normal window of time for combustion. The knock sensor 23 is shown communicatively coupled to a control system or controller 25, such as an engine control unit (ECU) 25. During operations, signals from the knock sensor 23 are communicated to the ECU 25 to determine if knocking conditions (e.g., pinging) exist. The ECU 25 may then adjust certain engine 10 parameters to ameliorate or eliminate the knocking conditions. For example, the ECU 25 may adjust ignition timing and/or a fuel/oxidant ratio to enhance engine performance.

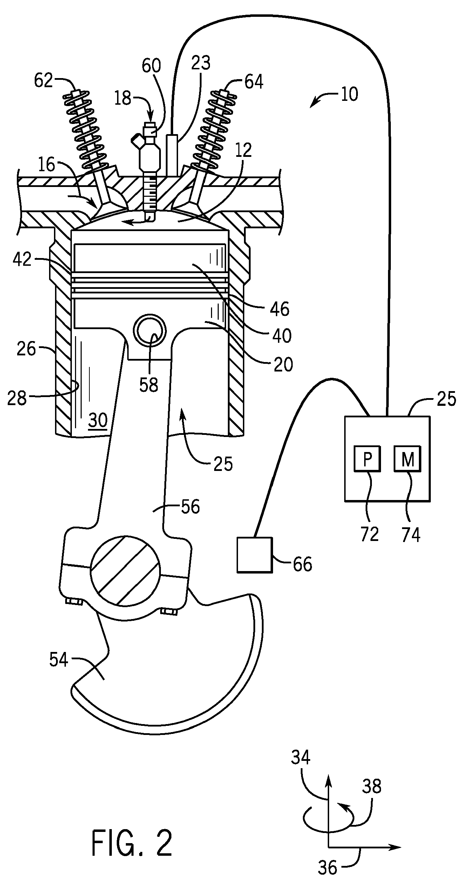

FIG. 2 is a cross-sectional side view of an embodiment of a piston-cylinder assembly having a piston 20 disposed within a cylinder 26 (e.g., an engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., a top land). The top portion 40 generally blocks the fuel 18 and the air 16, or a fuel-air mixture 32, from escaping from the combustion chamber 12 during reciprocating motion of the piston 20.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. As shown, the combustion chamber 12 is positioned adjacent to the top land 40 of the piston 24. A fuel injector 60 provides the fuel 18 to the combustion chamber 12, and an intake valve 62 controls the delivery of oxidant (e.g., air 16) to the combustion chamber 12. An exhaust valve 64 controls discharge of exhaust from the engine 10. However, it should be understood that any suitable elements and/or techniques for providing fuel 18 and air 16 to the combustion chamber 12 and/or for discharging exhaust may be utilized, and in some embodiments, no fuel injection is used. In operation, combustion of the fuel 18 with the oxidant 16 in the combustion chamber 12 may cause the piston 20 to move in a reciprocating manner (e.g., back and forth) in the axial direction 34 within the cavity 30 of the cylinder 26.

During operations, when the piston 20 is at the highest point in the cylinder 26 it is in a position called top dead center (TDC). When the piston 20 is at its lowest point in the cylinder 26, it is in a position called bottom dead center (BDC). As the piston 20 moves from TDC to BDC or from BDC to TDC, the crankshaft 54 rotates one half of a revolution. Each movement of the piston 20 from TDC to BDC or from BDC to TDC is called a stroke, and engine 10 embodiments may include two-stroke engines, three-stroke engines, four-stroke engines, five-stroke engines, six-stroke engines, or more.

During engine 10 operations, a sequence including an intake process, a compression process, a power process, and an exhaust process typically occurs. The intake process enables a combustible mixture, such as fuel 18 and oxidant 16 (e.g., air), to be pulled into the cylinder 26, thus the intake valve 62 is open and the exhaust valve 64 is closed. The compression process compresses the combustible mixture into a smaller space, so both the intake valve 62 and the exhaust valve 64 are closed. The power process ignites the compressed fuel-air mixture, which may include a spark ignition through a spark plug system, and/or a compression ignition through compression heat. The resulting pressure from combustion then forces the piston 20 to BDC. The exhaust process typically returns the piston 20 to TDC, while keeping the exhaust valve 64 open. The exhaust process thus expels the spent fuel-air mixture through the exhaust valve 64. It is to be noted that more than one intake valve 62 and exhaust valve 64 may be used per cylinder 26

The depicted engine 10 may include a crankshaft sensor 66, knock sensor 23, and the engine control unit (ECU) 25, which includes a processor 72 and memory unit 74. The crankshaft sensor 66 senses the position and/or rotational speed of the crankshaft 54. Accordingly, a crank angle or crank timing information may be derived. That is, when monitoring combustion engines, timing is frequently expressed in terms of crankshaft angle. For example, a full cycle of a four stroke engine 10 may be measured as a 720° cycle. The knock sensor 23 may be a piezoelectric accelerometer, a microelectromechanical system (MEMS) sensor, a Hall effect sensor, a magnetostrictive sensor, and/or any other sensor designed to sense vibration, acceleration, acoustics, sound, and/or movement. In other embodiments, the sensor 23 may not be a knock sensor, but any sensor that may sense vibration, pressure, acceleration, deflection, or movement.

Because of the percussive nature of the engine 10, the knock sensor 23 may be capable of detecting signatures even when mounted on the exterior of the cylinder 26. However, the knock sensor 23 may be disposed at various locations in or about the cylinder 26. Additionally, in some embodiments, a single knock sensor 23 may be shared, for example, with one or more adjacent cylinders 26. In other embodiments, each cylinder may include one or more knock sensors 23. The crankshaft sensor 66 and the knock sensor 23 are shown in electronic communication with the engine control unit (ECU) 25. The ECU 25 includes non-transitory code or instructions stored in a machine-readable medium (e.g., the memory unit 74) and used by a processor (e.g., the processor 72) to implement the techniques disclosed herein. The memory may store computer instructions that may be executed by the processor 72. Additionally, the memory may store look-up tables and/or laboratory performance data relating to normal operating conditions of the engine 10 that may be compared to signals received from the knock sensor 23 and/or the crankshaft sensor 66. The ECU 25 monitors and controls the operation of the engine 10, for example, by adjusting ignition timing, timing of opening/closing valves 62 and 64, adjusting the delivery of fuel and oxidant (e.g., air), and so on.

In certain embodiments, other sensors may also be included in the system 8 and coupled to the ECU 25. For example, the sensors may include atmospheric and engine sensors, such as pressure sensors, temperature sensors, speed sensors, and so forth. For example, the sensors may include knock sensors, crankshaft sensors, oxygen or lambda sensors, engine air intake temperature sensors, engine air intake pressure sensors, jacket water temperature sensors, engine exhaust temperature sensors, engine exhaust pressure sensors, and exhaust gas composition sensors. Other sensors may also include compressor inlet and outlet sensors for temperature and pressure.

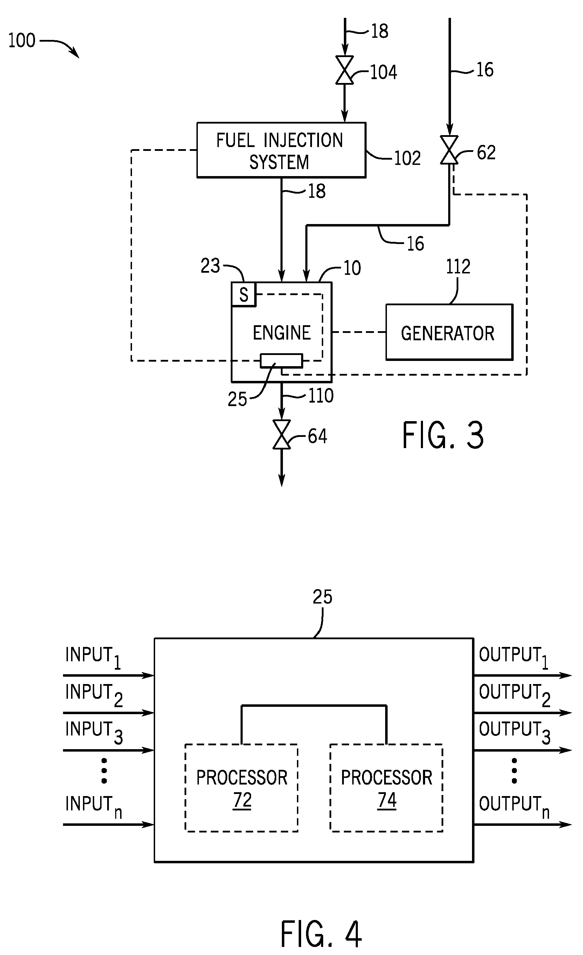

FIG. 3 illustrates a block diagram of an embodiment of a portion of an engine driven power generation system 100 having the engine 10, a fuel injection system 102, the intake valve 62, and a controller 25 (e.g., the ECU) at least coupled to the fuel injection system 102. In certain embodiments a fuel 18 may enter the fuel injection system 102 through a valve 104. The valve 104 may be configured to control a flow rate of the fuel 18 into the fuel injection system 102. A controlled amount of the fuel 18 may then be injected into the engine 10 (e.g., the combustion chamber 12) via the fuel injection system 102. Additionally, an oxidant 16 may also be fed into the engine (e.g., the combustion chamber 12) via the intake valve 62. In the combustion chamber 12, a spark may be introduced (e.g., from a spark plug), or may already be present, causing a mixture of fuel 18 and oxidant 16 to combust. After combustion, exhaust gases 110 may exit the engine via the exhaust valve 64, an exhaust manifold, or another device configured to facilitate flow out of the engine 10. Combustion drives the piston 20 within the cylinder 26, which may drive the load 24, such as a generator 112.

The fuel injection system 102 may be configured to regulate an amount of fuel 18 that enters the engine 10. In certain embodiments, the fuel injection system 102 may have one or more valves and corresponding actuators connected to the controller 25. For example, the fuel injection system 102 may include the fuel injector 60, among other devices, which may control the amount of fuel 18 injected into the engine 10. By adjusting the fuel injector 60 (e.g., via actuators), the fuel/oxidant ratio in the engine 10 may be controlled by the controller 25. In other embodiments, the fuel injection system 102 may be configured to mix the fuel 18 and the oxidant 16. In such embodiments, the fuel injection system 102 may inject a mixture of the fuel 18 and the oxidant 16 into the engine 10.

In certain embodiments, the system 100 may also include the knock sensor 23 disposed in the engine 10. The knock sensor 23 may be communicatively coupled to the controller 25 (e.g., the ECU). The knock sensor 23 may measure engine knocking, e.g., combustion at an unexpected time not during a normal window of time for combustion, and send a signal to the controller 25 when a knocking event occurs. In certain embodiments, the controller 25 may be configured to deliberately cause engine knocking during normal engine operation so that the controller 25 can determine a knock margin value. The knock margin value may be determined based on the timing of the engine knock and a base timing value. The controller 25 may compare the knock margin, along with other operating condition parameters of the engine 10, to laboratory performance data to compute a fuel quality estimate. The controller 25 may utilize the fuel quality estimate to adjust an engine timing map to enhance overall engine performance. In other embodiments, the controller may utilize the fuel quality estimate to adjust the ratio of fuel to oxidant that is injected into the engine 10.

The engine 10 of system 100 may include a reciprocating or piston engine (e.g., internal combustion engine). The engine 10 may include a spark-ignition engine or a compression-ignition engine. The engine 10 may include a natural gas engine, gasoline engine, diesel engine, or dual fuel engine. The engine 10 may be a two-stroke engine, three-stroke engine, four-stroke engine, five-stroke engine, or six-stroke engine. The engine 10 may also include any number of cylinders 26 (e.g., 1-24 cylinders or any other number of cylinders) and associated piston 20 and liners.

FIG. 4 illustrates a block diagram of an embodiment of the controller 25 (e.g., the ECU) of FIGS. 2 and 3. The controller 25 may include the processor 72 and the memory unit 74. The controller 25 may be coupled to various sensors and devices throughout the system 100 such that it is configured to receive inputs from those sensors and devices. By receiving various inputs, the controller 25 may be configured to regulate the ratio of fuel/oxidant in the engine 10 and/or to adjust the engine timing map, among other things.

In certain embodiments, the controller 25 may receive signals from one or more sensors that may be included in the engine driven power generation system 100, such as the knock sensor 23. The sensors may include atmospheric and engine sensors, such as pressure sensors, temperature sensors, speed sensors, and so forth. For example, the sensors may include knock sensors, oxygen or lambda sensors, engine air intake temperature sensors, engine air intake pressure sensors, jacket water temperature sensors, engine exhaust temperature sensors, engine exhaust pressure sensors, and exhaust gas composition sensors. Other sensors may also include compressor inlet and outlet sensors for temperature and pressure. The controller 25 may control other devices (e.g., valves in the fuel injection system 102) via one or more actuators.

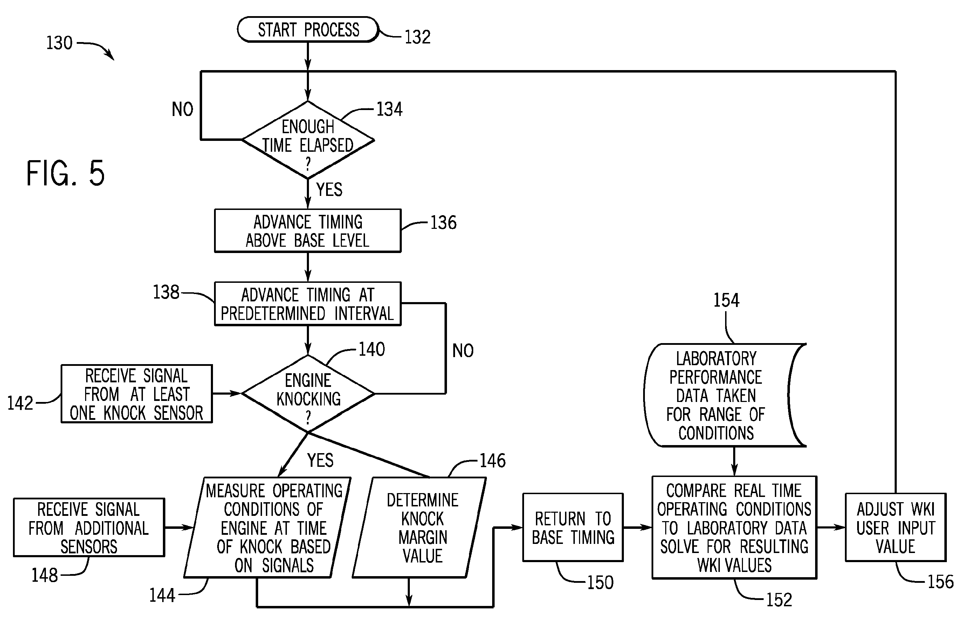

After receiving signals from various sensors and devices, the controller 25 (e.g., via the processor 72) may send a variety of signals to actuators and/or other devices to control operations of the engine 10. For example, the knock sensor 23 may send a signal to the controller 25 when engine knock occurs, e.g., combustion at an unexpected time not during a normal window of time for combustion. Based on the knock sensor 23 signal, the controller 25 may adjust the ratio of the fuel to oxidant by sending a signal to an actuator that controls one or more valves in the fuel injection system 102. In certain embodiments, the knock sensor 23 signal may enable the controller 25 to estimate a value of the fuel quality in the engine. Estimating the fuel quality will be discussed in more detail herein with reference to FIG. 5.

In certain embodiments, the controller 25 may adjust the fuel to oxidant ratio when it receives a signal from the knock sensor 23 related to fuel quality. Fuel quality may be quantified using a Waukesha Knock Index ("WKI") value, an anti-knock index ("AKI") value, a research octane number ("RON"), a motor octane number ("MON"), an octane blending value, a cetane number, a methane number, a lower heating value ("LHV"), a higher heating value ("HHV"), a British thermal unit ("BTU") value, a laminar flame speed, a hydrogen to carbon ratio, or any other system used for quantifying fuel quality. In certain embodiments, the fuel quality in the engine 10 may have an octane number (e.g., RON or MON) between 40 and 120.3, an octane number (e.g., RON or MON) between 78.0 and 120.3, a cetane number between 0.1 and 100.0, a cetane number between 0.1 and 40.0, a methane number between 35.0 and 100.0, or a methane number between 45.0 and 100.0. In other embodiments, the fuel quality in the engine 10 may have an octane blended value between 120.3 and 160.0. In certain embodiments, an octane blended value may correspond to an extrapolated octane number for fuels with blend ratios enabling an octane number exceeding 120.3.

If the fuel quality value estimated by the controller 25 exceeds a threshold value, then the controller 25 may increase the amount of oxidant 16 in the engine 10 by sending a signal to an actuator to adjust the intake valve 62 to increase a flow of oxidant 16. Additionally, the controller 25 may decrease the amount of fuel 18 in the engine 10 by sending a signal to an actuator to adjust the fuel injector 60 to decrease a flow of fuel 18. Conversely, if the fuel quality value estimated by the controller 25 is below a threshold value, then the controller 25 may decrease the amount of oxidant 16 in the engine 10 by sending a signal to the actuator to adjust the intake valve 62 to decrease the flow of oxidant 16. Additionally, the controller 25 may increase the amount of fuel 18 in the engine 10 by sending a signal to the actuator to adjust the fuel injector 60 to increase the flow of fuel 18.

In other embodiments, the controller 25 may adjust an engine timing map in response to the signal received from the knock sensor 23. The controller 25 may determine a knock margin based on the signal from the knock sensor 23 that engine knocking occurred. In some cases, engine timing may be purposefully adjusted to cause engine knocking, which is generally regarded as an undesirable event, during normal engine operation. Adjusting the engine timing from a base timing value to an engine knock timing enables the controller 25 to measure knock margin. Using the knock margin measurement, the controller 25 can estimate an unknown operating parameter of the engine 10, such as fuel quality. In turn, the controller 25 may adjust the engine timing map based on the estimated operating condition so that the engine timing values included in the engine timing map may be optimized in accordance with the operating parameters. The engine timing map may be a set of data that includes engine timing values that correspond to known operating conditions such as engine speed, load, etc. Engine timing (e.g., ignition timing, fuel injection timing, valve timing, etc.) may generally refer to the moment during a given cycle of an internal combustion engine when a spark is introduced (e.g., via a spark plug) to trigger combustion of the fuel 18 and oxidant 16.

Knock margin may refer to the difference between the timing of an engine knocking event and a base timing value. The base timing value may be an arbitrary timing value that provides a cushion between the chosen base timing value and an anticipated timing of engine knock. The anticipated timing of engine knock may be estimated by utilizing historical data, empirical data, knowledge-based data, or the like. In certain embodiments, the base timing value may depend on the speed and load of the engine 10. Knock margin may be calculated by the controller 25 during normal engine operation and then compared to laboratory performance data stored in the memory unit 74. This comparison may enable the processor 72 to estimate a fuel quality of the fuel 18 in the engine 10. In certain embodiments, the laboratory performance data may be a large data set (e.g., a look-up table, an equation, an algorithm, a computer model, etc.) gathered through a design of experiments ("DOE") process. DOE may refer to a systematic method where one variable (e.g., an operating condition of the engine such as speed and/or load) is varied to observe how other variables respond. For example, a laboratory performance data set may have operating condition data for an internal combustion engine at every practical engine speed and load value. All corresponding operating conditions that vary with engine speed and load may be included in the laboratory performance data, such as temperature, ambient humidity, barometric pressure, fuel quality, and knock margin, among others. In some embodiments, the controller 25 may be configured to estimate a fuel quality value by finding a fuel quality value (e.g., WKI value, AKI value, RON, MON, octane blending value, cetane number, methane number, LHV, HHV, BTU value, laminar flame speed value, hydrogen to carbon ratio) that corresponds to the knock margin, engine speed, and load measured during normal engine operation in a laboratory performance data set.

FIG. 5 illustrates a flow chart 130 of an embodiment of a computer implemented method for determining a fuel quality of the engine 10. For example, the processor 72 of the controller 25 may execute programs to execute data stored in the memory 74. At block 132, the method begins or starts. Therefore, the processor 72 may be commanded to begin the method by a user or by an electronic signal received from another processing unit. At block 134, the processor 72 determines whether enough time has elapsed since the previous process ended before advancing the engine 10 timing to cause an engine knocking event. If enough time has not passed, then the engine 10 may continue operating normally (e.g., without incurring an induced engine knocking event). In certain embodiments, a pre-set lag time (e.g., a threshold time) may be programmed into the processor 72, such that it will not begin advancing the engine timing until after the pre-set lag time has elapsed. In other words, because measuring the knock margin involves inducing the engine 10 to undergo engine knocking, a generally undesirable event, a pre-set lag time may be included in the method such that the engine 10 does not incur continuous combustion cycles that result in engine knocking. For example, the pre-set time value may be between approximately 1 hour and 24 hours, 30 minutes and 5 hours, 10 minutes and 2 hours, 5 minutes and 1 hour, and 10 seconds and 30 minutes. In certain embodiments, the operator of the engine 10 may be able to override the pre-set lag time value, such that if a new fuel is used, the operator may begin the process immediately without having to wait for the pre-set lag time to expire.

At block 136, the processor 72 may begin advancing engine timing above the base timing level. As discussed above, the base timing value may be an arbitrary timing value that is chosen to provide a cushion between the base timing value and an anticipated timing of engine knocking. The anticipated timing of engine knocking may be estimated by utilizing historical data, empirical data, knowledge based data, or the like. At block 138, the processor 72 may continue to advance the engine timing. In certain embodiments, an advancement interval may be pre-programmed into the processor 72 such that the processor 72 may advance the engine 10 timing at a predetermined rate. For example, the processor 72 may advance engine timing by adjusting the crankshaft 54 angle such that each timing advancement may be between approximately 0.1 and 50 degrees, 0.1 and 25 degrees, 0.1 and 10 degrees, 0.1 and 5 degrees, or 0.5 and 1 degree. In other embodiments, the engine timing may be advanced in increments of 0.1, 0.2, 0.3, 0.4, 0.5, 1, 2, 3, 4, 5, 10, 15, 25, 40, 50, 60, 70, 80, or 90 degrees. It should be noted that the timing advancement interval may be the same or different for each timing advancement at block 138.

In certain embodiments, the processor 72 may determine whether engine knocking has occurred at block 140 after each advancement of engine timing at block 138. To determine whether engine knocking has occurred, the processor 72 may receive a signal 142 from the knock sensor 23. The signal 142 may be in the form of a voltage, change in voltage, vibrational signature, sound signature, or another knock sensor signature indicative of whether engine knocking has occurred. In certain embodiments, a threshold value may be pre-programmed into the processor 72 such that the processor 72 may compare the signal received from the knock sensor 23 to the pre-programmed threshold value to determine whether engine knock has occurred. For example, if the signal 142 received from the knock sensor 23 is at or above a threshold level, the processor 72 may determine that engine knocking has occurred and no more engine timing advancements will be commanded by the processor 72. Conversely, if the signal 142 received from the knock sensor 23 is below the threshold level, the processor 72 may determine that no engine knocking has occurred and continue to advance the engine timing at the predetermined interval by returning to block 138.

If the processor 72 determines that engine knocking has occurred, it may execute actions shown in blocks 144 and 146. For example, if the processor 72 determines that engine knocking has occurred, it may measure operating conditions of the engine 10 at the time of knock based on signals 148 that it receives from other sensors in the system 100, as shown in block 144. For example, the processor 72 may receive signals 148 corresponding to temperature, ambient humidity, barometric pressure, engine speed, load, or any other operating condition related to engine performance when it detects that an engine knocking event has occurred. Additionally, the processor 72 may simultaneously, or before or after measuring other operating conditions of the engine 10, determine the knock margin value, as shown in block 146. In certain embodiments, the processor 72 may calculate the knock margin value by taking the difference between the timing when engine knock occurred and the base engine timing (e.g., the timing at block 136).

In certain embodiments, after the processor 72 has measured operating conditions of the engine at the time of engine knocking and determined the knock margin, the processor 72 may return to the base timing, as shown in block 150. As such, the engine 10 operates under normal conditions (e.g., no induced engine knocking). The base timing value may be the same or different than the base timing value at block 136. For example, the base timing value may not be the same for each iteration of the process because the base timing value may depend on one or more operating conditions of the engine 10 (e.g., engine speed and/or load), which may also vary between iterations.

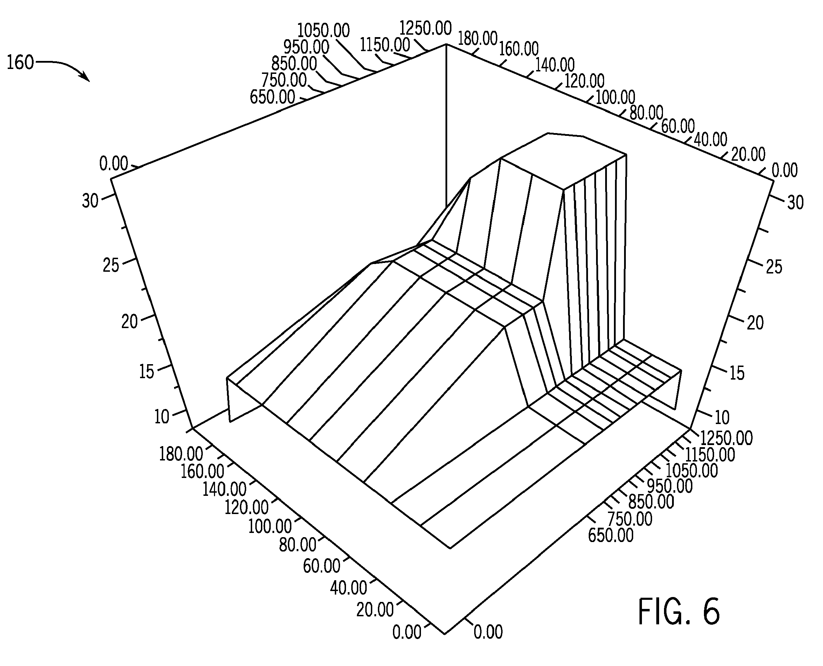

At block 152, the processor 72 may compare the operating conditions measured at block 144 and the knock margin from block 146 to values in a laboratory performance data set 154. By comparing the measured operating conditions and knock margin to the laboratory performance data set 154, the processor 72 may interpolate and/or estimate a corresponding fuel quality value (e.g., WKI value, AKI value, RON, MON, octane blending value, cetane number, methane number, LHV, HHV, BTU value, laminar flame speed value, hydrogen to carbon ratio). In certain embodiments, the laboratory performance data set 154 may be stored in the memory unit 74 of the controller 25. The laboratory performance data set 154 is discussed in more detail herein with reference to FIG. 6.

In certain embodiments, after the processor 72 estimates the fuel quality value, the processor 72 may adjust the fuel quality input, as shown in block 156. By adjusting the fuel quality input, the processor 72 may then adjust the engine timing map utilizing the estimated fuel quality value as well as other operating condition values, such as those measured at block 144. Therefore, the engine timing map may be adjusted by taking into consideration multiple factors (e.g., fuel quality, intake valve timing, fuel injector timing, fuel temperature, fuel pressure, engine speed, load, air temperature, engine temperature, and intake air pressure) that may affect the engine timing, thereby enhancing engine performance. Alternatively, the processor 72 may adjust the engine timing map directly based on the estimated fuel quality value alone.

After the fuel quality value is adjusted, or the engine timing map has been adjusted, the process may repeat such that the processor 72 determines whether the pre-set lag time has elapsed since the previous process was completed, as shown in block 134.

In other embodiments, the processor 72 may adjust the fuel to oxidant ratio based on the estimated fuel quality value. For example, if the processor 72 estimates that the fuel quality value is higher than anticipated, the amount of fuel in the engine 10 may be decreased (e.g., by sending a signal to the actuator that adjusts the fuel injector 60).

Conversely, if the processor 72 estimates that the fuel quality value is lower than anticipated, the amount of fuel in the engine 10 may be increased (e.g., by sending a signal to the actuator that adjusts the intake valve 62).

FIG. 6 is a graphical representation of an embodiment of a laboratory performance data set 160 for determining a fuel quality of the engine 10. As illustrated, the laboratory performance data set 160 is in the form of a three-dimensional graph. Therefore, in certain embodiments, the fuel quality value may be estimated by corresponding values of two measured operating conditions (e.g., engine temperature, ambient humidity, barometric pressure, fuel quality, and knock margin) to an associated fuel quality value. In other embodiments, the laboratory performance data set 160 may be a data table, a list, or another form of data storage.

In certain embodiments, the laboratory performance data may be a large data set (e.g., historical data, empirical data, knowledge based data, and the like) gathered through a design of experiments ("DOE") process. DOE may refer to a systematic method where one variable (e.g., an operating condition of the engine such as speed and/or load) is varied to observe how other variables respond. For example, a laboratory performance data set may have operating condition data (e.g., knock margin) for an internal combustion engine at every practical engine speed and load value. All corresponding operating conditions that vary with engine speed and load may be included in the laboratory performance data, such as temperature, ambient humidity, barometric pressure, fuel quality, and knock margin, among others.

Technical effects of the invention include receiving a signal from a knock sensor related to an engine knocking event. The signal may be used to determine a knock margin, which may be used to estimate a fuel quality using laboratory performance data. Parameters of the internal combustion engine (e.g., the engine timing map) can then be adjusted based on the fuel quality estimate to improve fuel efficiency, enhance power output, etc.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a controller configured to control operations of a combustion engine, to receive a signal from at least one knock sensor coupled to the combustion engine, to determine a knock margin value from the signal, and to estimate a fuel quality value of a fuel injected into the combustion engine based at least on a comparison between the knock margin value and a laboratory performance data set.
2. The system of clause 1, wherein the knock margin value comprises a difference between a base timing value and a knock timing value, and the knock timing value correlates with a timing that causes an engine knocking event in the combustion engine.
3. The system of any preceding clause, wherein the controller is configured to determine an engine timing based at least on an engine timing map and to compute the knock margin value by advancing the engine timing until an engine knocking event occurs in the combustion engine.
4. The system of any preceding clause, wherein the controller is configured to adjust the engine timing map in response to the fuel quality value.
5. The system of any preceding clause, wherein the controller is configured to measure one or more operating conditions of the combustion engine at the time of the engine knocking event based on one or more signals received from the one or more sensors, and to compare the one or more operating conditions and the knock margin value to the laboratory performance data set to estimate the fuel quality value, wherein the one or more additional sensors exclude a knock sensor.
6. The system of any preceding clause, comprising a fuel injection system configured to inject a fuel into the combustion engine, and the controller is configured to adjust an oxidant/fuel ratio in response to the fuel quality value.
7. The system of any preceding clause, wherein the laboratory performance data set comprises known fuel quality values corresponding to known values of at least one operating condition of the combustion engine.
8. The system of any preceding clause, wherein the at least one operating condition comprises a temperature, a pressure, a humidity, a load, a speed, or a knock timing of the combustion engine, or any combination thereof.
9. The system of any preceding clause, wherein the fuel quality value comprises a Waukesha Knock Index ("WKI") value, an Anti-Knock Index ("AKI") value, a research octane number ("RON"), a motor octane number ("MON"), an octane blending value, a cetane number, a methane number, a lower heating value ("LHV"), a higher heating value ("HHV"), a British thermal unit ("BTU") value, a laminar flame speed value, a hydrogen to carbon ratio, or any other value corresponding to a fuel quality.
10. A system, comprising:
   a combustion engine controller configured to:
      receive a signal from at least one knock sensor coupled to a combustion engine;
      determine a knock margin value from the signal;
      estimate a fuel quality value of a fuel injected into the combustion engine based at least on a comparison between the knock margin value and a laboratory performance data set; and
      output a control action for at least the combustion engine based on the estimated fuel quality value.
11. The system of any preceding clause, wherein the knock margin value comprises a difference between a base timing value and a knock timing value, and the knock timing value correlates with a timing that causes an engine knocking event in the combustion engine.
12. The system of any preceding clause, wherein the combustion engine controller is configured to determine an engine timing based at least on an engine timing map and to compute the knock margin value by advancing a timing of the combustion engine until an engine knocking event occurs in the combustion engine.
13. The system of any preceding clause, wherein the combustion engine controller is configured to adjust the engine timing map in response to the fuel quality value.
14. The system of any preceding clause, wherein the combustion engine controller is configured to measure one or more operating conditions of the combustion engine at the time of the engine knocking event based on one or more signals received from one or more additional sensors, and to compare the one or more operating conditions and the knock margin value to the laboratory performance data set to estimate the fuel quality value, wherein the one or more additional sensors exclude a knock sensor.
15. The system of any preceding clause, wherein the combustion engine controller is configured to adjust an oxidant/fuel ratio in response to the fuel quality value.
16. The system of any preceding clause, wherein the laboratory performance data set comprises known fuel quality values corresponding to known values of at least one operating condition of the combustion engine.
17. The system of any preceding clause, wherein the at least one operating condition comprises a temperature, a pressure, a humidity, a load, a speed, or a knock timing of the combustion engine, or any combination thereof.
18. A method, comprising:
   receive, via a controller, a signal from at least one knock sensor coupled to a combustion engine;
   determine, via the controller, a knock margin value from the signal;
   estimate, via the controller, a fuel quality value of a fuel injected into the combustion engine based at least on a comparison between the knock margin value and a laboratory performance data set; and
   output, via the controller, a control action for at least the combustion engine based on the estimated fuel quality value.
19. The method of any preceding clause, comprising adjusting an oxidant/fuel ratio in response to the fuel quality value.
20. The method of any preceding clause, wherein the laboratory performance data set comprises known fuel quality values corresponding to known values of at least one operating condition of the combustion engine, wherein the at least one operating condition comprises a temperature, a pressure, a humidity, a load, a speed, or a knock timing of the combustion engine, or any combination thereof.

## Claims

1. A system (8), comprising:
a controller (25) configured to control operations of a combustion engine (10), to receive a signal from at least one knock sensor (23) coupled to the combustion engine, to determine a knock margin value from the signal, and to estimate a fuel quality value of a fuel injected into the combustion engine based at least on a comparison between the knock margin value and a laboratory performance data set.

2. The system (8) of claim 1, wherein the knock margin value comprises a difference between a base timing value and a knock timing value, and the knock timing value correlates with a timing that causes an engine knocking event in the combustion engine (10).

3. The system (8) of either of claim 1 or 2, wherein the controller (25) is configured to determine an engine timing based at least on an engine timing map and to compute the knock margin value by advancing the engine timing until an engine knocking event occurs in the combustion engine (10).

4. The system (8) of claim 3, wherein the controller (25) is configured to adjust the engine timing map in response to the fuel quality value.

5. The system (8) of claim 3, wherein the controller (25) is configured to measure one or more operating conditions of the combustion engine (10) at the time of the engine knocking event based on one or more signals received from the one or more sensors, and to compare the one or more operating conditions and the knock margin value to the laboratory performance data set to estimate the fuel quality value, wherein the one or more additional sensors exclude a knock sensor.

6. The system (8) of any preceding claim, comprising a fuel injection system configured to inject a fuel into the combustion engine (10), and the controller (25) is configured to adjust an oxidant/fuel ratio in response to the fuel quality value.

7. The system (8) of any preceding claim, wherein the laboratory performance data set comprises known fuel quality values corresponding to known values of at least one operating condition of the combustion engine (10).

8. The system (8) of claim 7, wherein the at least one operating condition comprises a temperature, a pressure, a humidity, a load, a speed, or a knock timing of the combustion engine, or any combination thereof.

9. The system (8) of any preceding claim, wherein the fuel quality value comprises a Waukesha Knock Index ("WKI") value, an Anti-Knock Index ("AKI") value, a research octane number ("RON"), a motor octane number ("MON"), an octane blending value, a cetane number, a methane number, a lower heating value ("LHV"), a higher heating value ("HHV"), a British thermal unit ("BTU") value, a laminar flame speed value, a hydrogen to carbon ratio, or any other value corresponding to a fuel quality.

10. The system (8) of any preceding claim, the controller (25) further configured to:
output a control action for at least the combustion engine (10) based on the estimated fuel quality value.

11. The system (8) of claim 10, wherein the knock margin value comprises a difference between a base timing value and a knock timing value, and the knock timing value correlates with a timing that causes an engine knocking event in the combustion engine (10).

12. The system (8) of either of claim 10 or 11, wherein the combustion engine controller (25) is configured to determine an engine timing based at least on an engine timing map and to compute the knock margin value by advancing a timing of the combustion engine (10) until an engine knocking event occurs in the combustion engine (10).

13. The system (8) of claim 12, wherein the combustion engine controller (25) is configured to adjust the engine timing map in response to the fuel quality value.

14. The system (8) of either of claim 12 or 13, wherein the combustion engine controller (25) is configured to measure one or more operating conditions of the combustion engine (10) at the time of the engine knocking event based on one or more signals received from one or more additional sensors, and to compare the one or more operating conditions and the knock margin value to the laboratory performance data set to estimate the fuel quality value, wherein the one or more additional sensors exclude a knock sensor.

15. A method, comprising:
receive, via a controller (25), a signal from at least one knock sensor (23) coupled to a combustion engine (10);
determine, via the controller (25), a knock margin value from the signal;
estimate, via the controller, a fuel quality value of a fuel injected into the combustion engine based at least on a comparison between the knock margin value and a laboratory performance data set; and
output, via the controller, a control action for at least the combustion engine based on the estimated fuel quality value.
